# EUROPEAN PATENT APPLICATION

(11) **EP 4 443 981 A1**
(43) Date of publication of application: **09.10.2024**
(21) Application number: 21965887.9
(22) Date of filing: 30.11.2021
(51) Int. Cl.: H04W 52/02

(54) **METHOD AND APPARATUS FOR MONITORING CONTROL CHANNEL, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2021/134385
(87) International publication number: WO 2023/097443

(57) **Abstract**

The present application relates to the field of mobile communications, and discloses a method and apparatus for monitoring a control channel, a device, and a storage medium. The method comprises: a terminal receives an energy saving signal sent by a network device, a transmission parameter of the energy saving signal being different from a transmission parameter of the control channel, the transmission parameter comprising at least one of a waveform, a modulation mode, and a coding and multiple access mode, wherein the energy saving signal is used for determining a monitoring mode of the control channel.

## Description

### TECHNICAL FIELD

The embodiments of the present disclosure relate to a field of mobile communication, in particular to a method for monitoring a control channel, a device for monitoring a control channel, a device and a storage medium.

### BACKGROUND

In the evolution of the 5th (5G) generation mobile communication system, a higher requirement is set power saving of a User Equipment (UE) in the connected state.

A power saving signal is introduced in the related art, and the power saving signal is used in combination with a Discontinuous Reception (DRX) mechanism, and a terminal receives indication of the power saving signal before an ON duration of the DRX. When data is to be transmitted by the terminal during a DRX cycle, the power saving signal wakes up the terminal to monitor a Physical Downlink Control Channel (PDCCH) during the On duration of the DRX. When no data is to be transmitted by the terminal during the DRX cycle, the power saving signal does not wake up the terminal, and the terminal does not monitor the PDCCH during the On Duration of the DRX.

### SUMMARY

The embodiments of the present disclosure provide a method for monitoring a control channel, a device for monitoring a control channel, a device and a storage medium, to save power of a UE in a connected state. The technical solution is described as follows.

An aspect of an embodiment of the present disclosure provides a method for monitoring a control channel which is applied to a terminal, and includes following operations.

A power saving signal is received from a network device. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

An aspect of an embodiment of the present disclosure provides a method for monitoring a control channel which is applied to a network device, and includes following operations.

A power saving signal is sent to a terminal. A transmission parameter of the power saving signal is different from a transmission parameter of a control channel, and the transmission parameter includes at least one of a waveform, a modulation mode, a coding mode or a multiple access mode.

The power saving signal is used to determine a monitoring mode for the control channel.

An aspect of an embodiment of the present disclosure provides a device for monitoring a control channel, which includes a receiving module.

The receiving module is configured to receive a power saving signal sent by a network device. A transmission parameter of the power saving signal is different from a transmission parameter of the control channel, and the transmission parameter includes at least one of: a waveform, a modulation mode, a coding mode or a multiple access mode.

The power saving signal is used to determine a monitoring mode for the control channel.

An aspect of an embodiment of the present disclosure provides a device for monitoring a control channel, which includes a sending module.

The sending module is configured to send a power saving signal to a terminal. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

An aspect of an embodiment of the present disclosure provides a terminal, and the terminal includes a wake-up receiver.

The wake-up receiver is configured to receive the power saving signal sent by the network device. A transmission parameter the power saving signal is different from a transmission parameter of the control channel, and the transmission parameter includes at least one of a waveform, a modulation mode, a coding mode or a multiple access mode.

The power saving signal is used to determine a monitoring mode for the control channel.

An aspect of an embodiment of the present disclosure provides a network device, which includes a transmitter.

The transmitter is configured to send a power saving signal to a terminal. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

An aspect of an embodiment of the present disclosure provides a computer-readable storage medium having stored thereon a computer program that, when executed by a processor, implements the above method for monitoring the control channel.

An aspect of an embodiment of the present disclosure provides a chip including a programmable logic circuitry and/or program instructions that, when run by the chip, implement the above method for monitoring the control channel.

An aspect of an embodiment of the present disclosure provides a computer program product or a computer program including computer instructions stored in a computer-readable storage medium from which a processor reads and executes the computer instructions to implement the above method for monitoring the control channel.

The technical solution provided by the embodiments of the present disclosure can bring the following beneficial effects.

A power saving signal is transmitted by using a first transmission parameter and a control channel is transmitted by using a second transmission parameter. Since under the same condition, power consumption of the first transmission parameter is less than power consumption of the second transmission parameter, more power in the present disclosure can be saved as compared with the related art in which the power saving signal and the control channel are transmitted by using the same transmission parameter, thereby providing good power saving performance for the UE in the connected state and improving the endurance time of the UE.

### BRIEF DESCRIPTION OF THE DRAWINGS

In order to more clearly explain the technical solution in the embodiments of the present disclosure, the drawings used in the description of the embodiments are briefly introduced below. It is apparent that the drawings described below are only some embodiments of the present disclosure, and other drawings can be obtained from these drawings without creative effort for those of ordinary skill in the art.
FIG. 1 is a diagram of a zero-power communication system according to an exemplary embodiment of the present disclosure.
FIG. 2 is a diagram showing a principle of radio frequency power harvesting according to an exemplary embodiment of the present disclosure.
FIG. 3 is a diagram of a back scattering communication process according to an exemplary embodiment of the present disclosure.
FIG. 4 is a diagram showing a principle of resistance load modulation according to an exemplary embodiment of the present disclosure.
FIG. 5 is a diagram of a coding mode according to an exemplary embodiment of the present disclosure.
FIG. 6 is a diagram of a terminal having a wake-up receiver according to an exemplary embodiment of the present disclosure.
FIG. 7 is a diagram of a zero-power consumption communication system according to an exemplary embodiment of the present disclosure.
FIG. 8 is a flowchart of a method for monitoring a control channel according to an exemplary embodiment of the present disclosure.
FIG. 9 is a flowchart of a method for monitoring a control channel according to an exemplary embodiment of the present disclosure.
FIG. 10 is a time-frequency diagram of a power saving signal according to an exemplary embodiment of the present disclosure.
FIG. 11 is a time-frequency diagram of a power saving signal according to an exemplary embodiment of the present disclosure.
FIG. 12 is a flowchart of a method for monitoring a control channel according to an exemplary embodiment of the present disclosure.
FIG. 13 is a diagram of a state machine corresponding to a power saving signal according to an exemplary embodiment of the present disclosure.
FIG. 14 is a flowchart of a method for monitoring a control channel according to an exemplary embodiment of the present disclosure.
FIG. 15 is a diagram of a state machine corresponding to a power saving signal according to an exemplary embodiment of the present disclosure.
FIG. 16 is a diagram of a state machine corresponding to a power saving signal according to an exemplary embodiment of the present disclosure.
FIG. 17 is a flowchart of a method for monitoring a control channel according to an exemplary embodiment of the present disclosure.
FIG. 18 is a diagram illustrating a delay when a search space is switched in an exemplary embodiment of the present disclosure.
FIG. 19 is an association diagram of a power saving signal and a control channel according to an exemplary embodiment of the present disclosure.
FIG. 20 is a block diagram of a device for monitoring a control channel according to an exemplary embodiment of the present disclosure.
FIG. 21 is a block diagram of a device for monitoring a control channel according to an exemplary embodiment of the present disclosure.
FIG. 22 is a schematic structural diagram of a terminal according to an exemplary embodiment of the present disclosure.
FIG. 23 is a schematic structural diagram of a network device according to an exemplary embodiment of the present disclosure.

### DETAILED DESCRIPTION

In order to make the object, the technical solution and advantages of the present disclosure clearer, the embodiments of the present disclosure are described in further detail below with reference to the accompanying drawings.

The network architecture and the service scenario described by the embodiments of the present disclosure are used to more clearly explain the technical solution of the embodiments of the present disclosure, and do not constitute a limitation to the technical solution provided by the embodiments of the present disclosure. Those of ordinary skilled in the art can see that with the evolution of the network architecture and the emergence of new service scenarios, the technical solution provided by the embodiments of the present disclosure is equally applicable to similar technical problems.

Before introducing the technical solution of the present disclosure, some technical knowledge involved in the present disclosure is introduced and explained first.

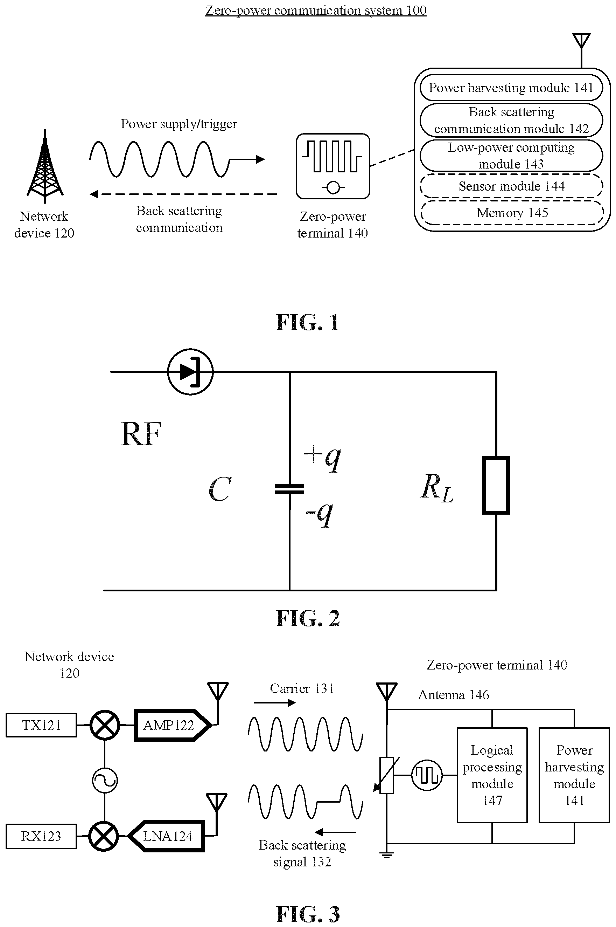

FIG. 1 illustrates a diagram of a zero-power communication system 100, and the zero-power communication system 100 includes a network device 120 and a zero-power terminal device 140.

The network device 120 sends a wireless power supply signal and a downlink communication signal to the zero-power terminal device, and receives a back scattering signal from the zero-power terminal device. The zero-power terminal device 140 includes a power harvesting module 141, a back scattering communication module 142 and a low-power computing module 143. The power harvesting module 141 can harvest the power carried by a radio wave in the space for driving the low-power computing module 143 of the zero-power terminal device 140 and realizing back scattering communication. Upon obtaining the power, the zero-power terminal device 140 may receive control signaling of the network device 120, and send data to the network device 120 based on a back scattering mode according to the control signaling. The sent data may come from the data stored by the zero-power terminal device (such as identity identification or pre-written information, such as a production date, a brand and a manufacturer of goods).

The zero-power terminal device 140 may further include a sensor module 144 and a memory 145. The sensor module 144 may include various sensors, and the zero-power terminal device 140 may report the data harvested by various sensors based on the zero-power mechanism. The memory 145 is used to store some basic information (such as article identification, etc.) or acquire sensing data such as ambient temperature and ambient humidity.

The zero-power terminal device does not need a battery, and can realize simple operations such as signal demodulation, decoding or encoding, modulation with the low-power computing module. Therefore, the zero-power module only needs simple hardware design, which reduces the cost and size of the zero-power device.

Next, the key technologies of zero-power communication are introduced.

### Radio Frequency Power Harvesting

FIG. 2 illustrates a principle of radio frequency power harvesting, in which based on the principle of electromagnetic induction, a radio frequency module RF performs electromagnetic induction and is connected to the capacitor C and the load resistor R_{L} which are connected in parallel, to harvest the power of a space electromagnetic wave and obtain the power for driving the zero-power terminal to operate, such as a low-power demodulation module, a modulation module, a sensor and memory reading. Therefore, the zero-power terminal device does not need a traditional battery.

### Back Scattering Communication

FIG. 3 illustrates a principle of a back scattering communication process. The zero-power terminal device 140 receives a wireless signal carrier 131 sent by a Transmit (TX) module 121 of the network device 120 using an Asynchronous Mapping Procedure (AMP) 122, modulates the wireless signal carrier 131, loads the information to be sent by using the logic processing module 142, and harvests the radio frequency power by using the power harvesting module 141. The zero-power terminal device 140 radiates the modulated reflected signal 132 using an antenna 146. This information transmission process is called back scattering communication. The Receive (RX) module 123 of the network device 120 receives the modulated reflected signal 132 by using a Low Noise Amplifier (LNA) 124. Back scattering and load modulation function are inseparable. Load modulation adjusts and controls circuit parameters of an oscillation loop of the zero-power terminal device 140 according to the beat of a data stream, so that a parameter such as an impedance of an electronic tag is changed accordingly, to implement the modulation process. The wireless signal carrier 131 may be a wireless power supply signal, and the reflected signal 132 may be a back scattering signal.

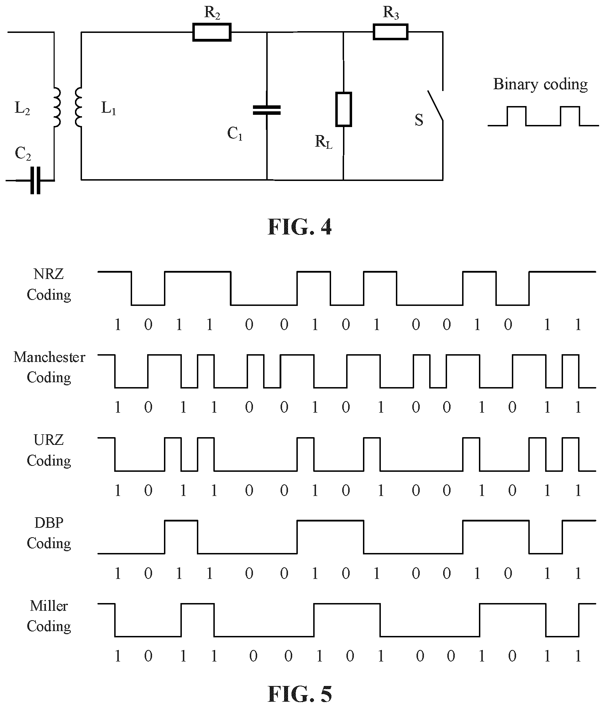

The load modulation technology includes resistance load modulation and capacitance load modulation. FIG. 4 illustrates a principle of resistance load modulation. In resistance load modulation, the load resistor R_{L} is connected in parallel with the third resistor R₃, and is turned on and turned off by the switch S controlled by binary coding. The turn-on and turn-off of the third resistor R₃ may cause a change of the voltage on the circuit, and the load resistor R_{L} and the first capacitor C₁ are connected in parallel, the load resistor R_{L} and the second resistor R₂ are connected in series, and the second resistor R₂ and the first inductor L₁ are connected in series. The first inductor L₁ and the second inductor L₂ are coupled, and the second inductor L₂ and the second capacitor C₂ are connected in series. Amplitude Shift Keying (ASK) can be realized, that is, the signal can be modulated and transmitted by regulating an amplitude of the back scattering signal of the zero-power terminal device. Similarly, in capacitance load modulation, a resonant frequency of the circuit can be changed by turning on and off the capacitor, to implement Frequency Shift Keying (FSK), that is, the signal can be modulated and transmitted by regulating an operation frequency of the back scattering signal of the zero-power terminal device.

The zero-power terminal device modulates an incoming wave signal by means of load modulation, to implement back scattering communication. The zero-power terminal device has the following apparent advantages. The terminal device does not actively transmit a signal, and thus does not need a complex radio frequency link, such as a Power Amplifier (PA) and a radio frequency filter. The terminal device does not need to actively generate a high-frequency signal, and thus does not need a high-frequency crystal oscillator. With the back scattering communication, signal transmission of the terminal does not need to consume the power of the terminal.

Next, a coding mode of zero-power communication is introduced.

FIG. 5 is a schematic diagram of the coding mode. The data transmitted by an electronic tag can be represented using different forms of codes to represent binary "1" and "0". Radio frequency identification systems usually use one of the following coding modes: Not Return to Zero (NRZ) coding, Manchester coding, Unipolar Return to Zero (URZ) coding, Differential Binary Phase (DBP) coding, Miller coding and Differential coding. That is, different pulse signals can be used to represent 0 and 1.

In the NRZ coding, a binary "1" is represented by using a high level and a binary "0" is represented by using a low level. The NRZ coding in FIG. 5 schematically illustrates a level of binary data 101100101001011 coded by using NRZ mode.

The Manchester Coding is also called Split-Phase Coding. In Manchester coding, the binary value is represented by a level change (rising or falling) within half of a bit period of a bit length. The negative transition in half of the bit period represents a binary "1" and the positive transition in half of the bit period represents a binary "0". An error in data transmission is caused by when the data bits simultaneously sent by multiple electronic tags have different values, the received rising edge and falling edge cancel each other out, and an uninterrupted carrier signal is generated throughout the bit length. In the Manchester coding, there is not unchanged state within the bit length. The reader can determine a location of the collision based on the error. Manchester coding facilitates finding the error in data transmission. When load modulation or back scattering modulation of the carrier is used, the Manchester coding is usually used for data transmission from electronic tags to readers. The Manchester coding in FIG. 5 schematically illustrates a level of the binary data 101100101001011 coded by the Manchester mode.

A high level of the URZ Coding in the first half of a bit period represents binary "1", and a low level signal that lasts for the whole bit period represents binary "1". The URZ coding in FIG. 5 illustrates a schematic diagram of a level diagram of binary data 101100101001011 coded by the URZ mode.

Any edge of the DBP Coding in half of a bit period represents binary "0" and no edge represents binary "1". In addition, at the beginning of each bit period, the level is reversed. For the receiver, it is easy to reconstruct the bit beat. The DBP coding in FIG. 5 schematically illustrates a level of binary data 101100101001011 coded by the DBP mode.

Any edge of the Miller coding in half of a bit period represents a binary "1", and a level that remains unchanged in the next bit period represents a binary "0". At the beginning of the bit period, the level is alternated, and it is easy for the receiver to reconstruct the bit beat. The Miller coding in FIG. 5 schematically illustrates a level of binary data 101100101001011 coded by using the Miller mode.

Every binary "1" to be transmitted in differential coding may cause a change of a signal level, and the signal level of binary "0" remains unchanged.

The zero-power terminal device is introduced next in detail. Based on the power source and usage mode of the zero-power terminal device, the zero-power terminal device can be divided into a passive zero-power terminal, a semi-passive zero-power terminal and an active zero-power terminal as follows.

The passive zero-power terminal is described as follows.

The zero-power terminal does not require a built-in battery, and when the zero-power terminal approaches a network device, the zero-power terminal is in a near-field range formed by radiation of the antenna of the network device. For example, the network device is a reader of a Radio Frequency Identification (RFID) system. Therefore, an antenna of the zero-power terminal generates an induced current through electromagnetic induction, and the induced current drives a low-power chip circuit of the zero-power terminal, to implement demodulation of a forward link signal and modulation of a backward link signal. For the back scattering link, the zero-power terminal transmits a signal by using the back scattering. The passive zero-power terminal does not need to be driven by the built-in battery either in a forward link or in a reverse link, and thus is a total zero-power terminal. The passive zero-power terminal does not need battery, and the RF circuit and baseband circuit are very simple, and a component such as a Low Noise Amplifier (LNA), a Power Amplifier (PA), a Crystal Oscillator, an Analog to Digital Converter (ADC) and other devices are not necessary. Hence, the passive zero-power terminal has many advantages such as small size, light weight, low cost and long service life.

The semi-passive zero-power terminal is described as follows.

The semi-passive zero-power terminal is not provided with a conventional battery, and may harvest a radio wave power by using a radio frequency power harvesting module and store the harvested power in a power storage unit, which is, for example, a capacitor. After obtaining the power, the power storage unit may drive a low-power chip circuit of the zero-power terminal, to implement demodulation of a forward link signal and modulation of a backward link signal. In the back scattering link, the zero-power terminal transmits a signal by using the back scattering implementation.

The semi-passive zero-power terminal does not need to be driven by the built-in battery either in a forward link or in a reverse link, and the power stored by capacitor used in operation of the semi-passive zero-power terminal is from radio power harvested by the RF power harvesting module. Hence, the semi-passive zero-power terminal is a total zero-power terminal. The semi-passive zero-power terminal inherits many advantages of the passive zero-power terminal, such as small size, light weight, low cost, long service life and many other advantages.

The active zero-power terminal is described as follows.

The active zero-power terminal can have a built-in battery. The battery is used to drive a low-power chip circuit of a zero-power terminal, to implement demodulation of a forward link signal and modulation of a backward link signal. However, in the back scattering link, the zero-power terminal transmits the signal by using the back scattering implementation. The zero power of the active zero-power terminal is mainly reflected in that the signal in the reverse link is transmitted by using the backward scattering manner without the power of the terminal. In the active zero-power terminal, the built-in battery supplies power to the RFID chip, to increase a reading and writing distance of the tag and improve the reliability of communication. The active zero-power terminal can be applied to some scenarios having a high requirement on communication distance and reading delay.

With the development of the communication industry, especially the increase of applications in the 5G industry, more and more types of connected objects and application scenarios occur, which has a high requirement for the price and power consumption of communication terminals. The applications of battery-free and low-cost passive Internet of Things devices have become the key technology of cellular Internet of Things, which can enrich the types and quantity of network link terminals and realize the Internet of Everything. The passive Internet of Things devices may be based on the zero-power communication technology, such as the RFID technology, and may be spread on this basis to be suitable for Cellular Internet of Things.

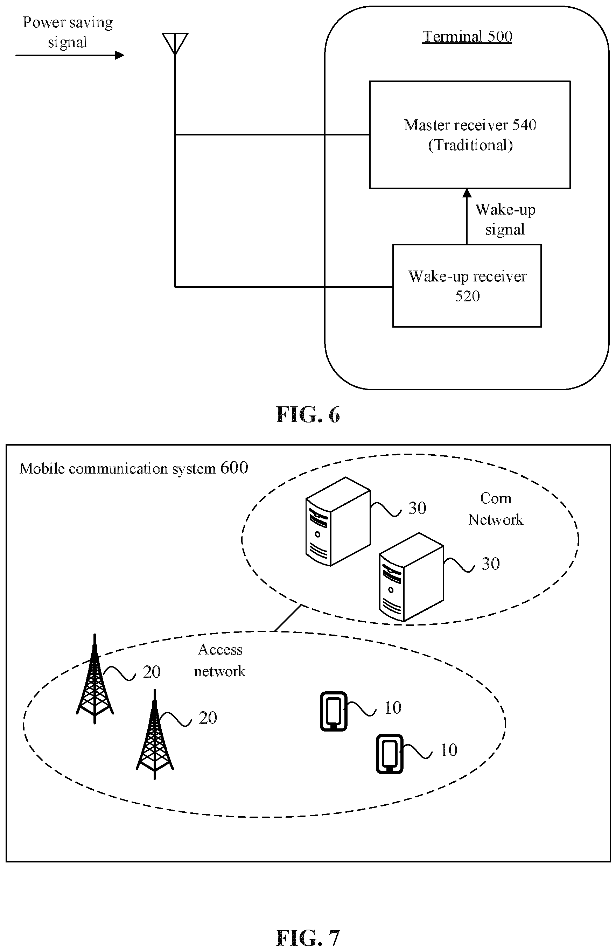

Based on the above zero-power terminal device, the present disclosure provides a terminal device 500 having a wake-up receiver. As illustrated in FIG. 6, the terminal device 500 includes a wake-up receiver 520 and a master receiver 540.

The wake-up receiver 520 is a zero-power receiver or a low-power receiver with power consumption less than a predetermined condition. The wake-up receiver 520 receives a power saving signal and sends a response signal of the power saving signal by using the first transmission parameter.

The master receiver 540 is a traditional receiver. The wake-up receiver 520 receives and sends a control channel and other traditional communication signals by using the second transmission parameter

Under the same conditions, for example, both of the first transmission parameter and the second transmission parameter are used to transmit the power saving signal, the power consumption of the first transmission parameter is less than the power consumption of the second transmission parameter.

FIG. 7 illustrates a diagram of a mobile communication system 600 according to an exemplary embodiment of the present disclosure. The mobile communication system 600 at least includes functional nodes such as a terminal 10, a network device 20 and a core network (CN) device 30 as follows.

The terminal 10 has both a wake-up receiver 520 and a master receiver 540, as illustrated in FIG. 6.

The network device 20 provides a communication link for the terminal 10, and/or provides the terminal 10 with a radio wave based on a radio wave power harvested by the RF power harvesting module, that is, providing the terminal 10 with power.

The CN device 30 is configured for data processing and receiving, control and management of related services, mobility, a user plane, a control plane, a gateway and other functions of the terminal 10.

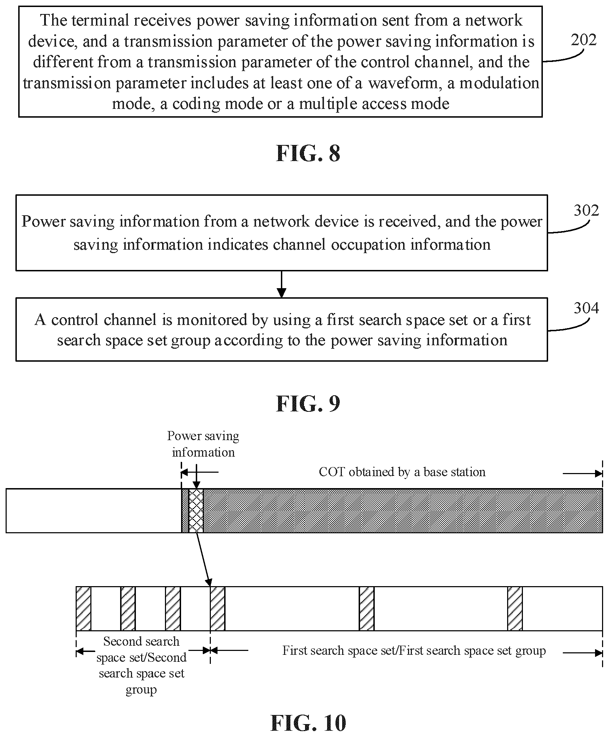

FIG. 8 is a flowchart of a method for monitoring a control channel provided by an exemplary embodiment of the present disclosure. This embodiment is described by taking the application of this method to a terminal as an example. The method includes the following operations.

In operation 202, the terminal receives power saving information from a network device. A transmission parameter of the power saving information is different from a transmission parameter of the control channel, and the transmission parameter includes at least one of a waveform, a modulation mode, a coding mode or a multiple access mode.

Optionally, power consumption of the first transmission parameter of the power saving information is less than power consumption of the second transmission parameter for the control channel.

The first transmission parameter is a transmission parameter corresponding to a wake-up receiver. Exemplarily, the first transmission parameter is a transmission parameter corresponding to a zero-power receiver and/or the first transmission parameter is a transmission parameter corresponding to a low-power receiver.

The second transmission parameter is a transmission parameter corresponding to a traditional receiver, or a transmission parameter corresponding to the conventional receiver, or a transmission parameter corresponding to non-zero-power Receiver and non-low-power receiver.

The modulation mode of the first transmission parameter includes any one of Amplitude Shift Keying (ASK) modulation, Frequency Shift Keying (FSK) modulation and 2Phase-Shift Keying (2PSK) modulation. The modulation mode of the second transmission parameter includes any one of Orthogonal Frequency-Division Multiplexing (OFDM) modulation, Quadrature Phase-Shift Keying (QPSK) modulation and Quadrature Amplitude Modulation (QAM).

The ASK is a digital modulation in which an amplitude of the carrier varies with a digital baseband signal. When the digital baseband signal is binary, the binary amplitude keying (2ASK) is used. The 2ASK is also known as On-Off Keying (OOK), and uses a unipolar non-return-to-zero code sequence to control the turn-on and turn-off of the main-link carrier. Optionally, the ASK also includes 4ASK, 8ASK, etc., which is not limited in this embodiment.

The FSK is a digital modulation in which a frequency of the carrier varies with the digital baseband signal. When the digital baseband signal is binary, a binary frequency shift keying (2FSK) is used. The 2FSK transforms two different carrier signals into digital signals, to complete information transmission. A state of transmitted information is represented by the change of the frequency of the carrier, and the frequency of modulated carrier varies with a state of binary sequence 0 and 1. Optionally, the FSK also includes 4FSK, 8FSK, etc., which is not limited in this embodiment.

The PSK is a digital modulation in which a phase of the carrier changes with the digital baseband signal. The 2PSK is the simplest form of phase shift keying, which transmits binary information by using two carriers, a different of initial phases of which is 180, and the 2PSK is also known as BPSK. The QPSK is Quaternary Phase Shift Keying, which represent the input digital information by using four different phase differences of carriers.

The OFDM is one type of Multi-Carrier Modulation (MCM). A main principle of the OFDM is to divide the channel into several orthogonal sub-channels, convert a high-speed data signals into parallel low-speed sub data streams, and modulate the signals on each sub-channel for transmission. The OFDM includes V-OFDM, W-OFDM, F-OFDM, MIMO-OFDM, multiband-OFDM, etc. which is not limited in this embodiment.

In the QAM, two independent baseband digital signals are used to suppress the dual-sideband modulation of two mutually orthogonal carriers of the same frequency, and two parallel pieces of digital information is transmitted according to the property that the modulated signals are orthogonal in spectrum in the same bandwidth. The QAM is a modulation technology that combines M-ary digital amplitude modulation (MASK) and M-ary digital phase modulation (MPSK), to expand the bandwidth by twice.

The first transmission parameter adopts a simple, low-order digital modulation mode, and the second transmission parameter adopts a relatively complex, high-order and orthogonal digital modulation mode. The signal complexity of the first transmission parameter is lower than the signal complexity of the second transmission parameter.

It should be noted that the examples of the modulation mode of the first transmission parameter and the modulation mode of the second transmission parameter are only described in the above embodiment, and should not constitute any restrictions on the present disclosure, and other existing or future defined modulation modes are not excluded to generate the first transmission parameter or the second transmission parameter.

The coding modes of the first transmission parameter and the second transmission parameter are different. The coding mode of the first transmission parameter includes any one of reverse NRZ coding, Manchester coding, unipolar return-to-zero coding, differential binary phase coding, Miller coding and differential coding. The coding mode of the second transmission parameter includes any one of a new Reed-Muller (RM) code, a Tail Biting CC (TBCC), a Turbo code, an outer code, a Low Density Parity Check Code (LDPC) and a Polar code.

The multiple access modes of the first transmission parameter and the second transmission parameter are different. The multiple access mode of the first transmission parameter includes any one of Frequency-Division Multiple Access (FDMA), Time-Division Multiple Access (TDMA) and Code-Division Multiple Access (CDMA). The multiple access mode of the second transmission parameter includes any one of Orthogonal Frequency-Division Multiple Access (OFDMA) and Discrete Fourier Transform Spread Orthogonal Frequency-Division Multiplexing (DFTS-OFDM).

It should be understood that the signal waveforms generated by different modulation modes are different. In this embodiment, the modulation modes of the first feedback signal and the second feedback signal are different, so the waveforms of the first feedback signal and the second feedback signal are different.

To sum up, according to the method of the embodiment, power saving information is transmitted by using a first transmission parameter, and a control channel is transmitted by using a second transmission parameter. Since power consumption of the first transmission parameter is less than power consumption of the second transmission parameter under the same condition, the present disclosure saves more power compared with the related art in which the power saving information and the control channel are transmitted by using the same transmission parameter, thereby providing better power saving performance for the UE in the connected state and improving the endurance time of the UE.

In an alternative embodiment based on FIG. 8, the power saving information is used to determine a monitoring mode for the control channel. Exemplarily, the power saving information is used to indicate at least one of channel occupation information, or switching information of a search space set or the search space set group; or skipping information of a monitoring occasion for the control channel.

The above three information are respectively described below with three embodiments.

For the power saving information indicating the channel occupation information, FIG. 9 is a flowchart of a method for monitoring a control channel according to an exemplary embodiment of the present disclosure. The embodiment is illustrated by taking the application of the method to a terminal as an example. The method includes the following operations.

In operation 302, power saving information sent by a network device is received. The power saving information is used to indicate channel occupation information.

In the case of using an unlicensed spectrum, after the network device obtains a Channel Occupancy Time (COT) through Listen Before Talk (LBT), the network device can send power saving information to the terminal. The terminal receives the power saving information through the wake-up receiver to obtain the power saving information.

The power saving information indicates channel occupation information. Exemplarily, the power saving information carries at least one of a channel occupation time, a remaining channel occupation time, or a time point at which channel occupation ends.

For example, the remaining channel occupation time includes a duration from a time when the power saving information is received and obtained to an end time of the channel occupation.

The terminal determines the remaining channel occupation time according to the power saving information, and monitors the control channel by using a first search space set or a first search space set group during the remaining channel occupation time.

In operation 304, the control channel is monitored by using the first search space set or the first search space set group according to the power saving information.

The first search space set or the first search space set group is a search space set used during a channel occupation time.

Because the channel occupation information is received by the wake-up receiver, the terminal can obtain the power saving information without frequently detecting the PDCCH, thereby greatly saving power. After obtaining the power saving information, the terminal may perform PDCCH detection and data reception by using the first search space set/first search space set group corresponding to channel occupation.

For example, the PDCCH is detected according to the first search space set within the remaining COT. Before receiving the power saving information, the terminal does not need to detect the PDCCH, and can even turn off the traditional master receiver to further save power. After the end of the COT, the terminal does not detect the PDCCH.

When the LBT is successful, the network device is not limited to send a signal to the terminal by the search space set of the PDCCH, and can send the power saving information to the terminal at any time through the power saving information to inform the terminal of the channel occupation information. Therefore, the terminal or the base station can use the channel in time and improve a success rate of channel access.

In one possible implementation, the control channel is monitored by using a second search space set or a second search space set group during a time other than the channel occupation time.

As illustrated in FIG. 10, the terminal monitors the PDCCH by using the second search space set or the second search space set group during a time other than the channel occupation time. When the network device successfully obtains the COT through the LBT, the network device can immediately send the power saving information to the terminal. After receiving the power saving information, the terminal obtains the channel occupation information of the network device, determines a time range of entering the COT, and monitors the PDCCH according to the first search space set.

In another possible implementation, the terminal does not monitor the control channel during a time other than the channel occupation time.

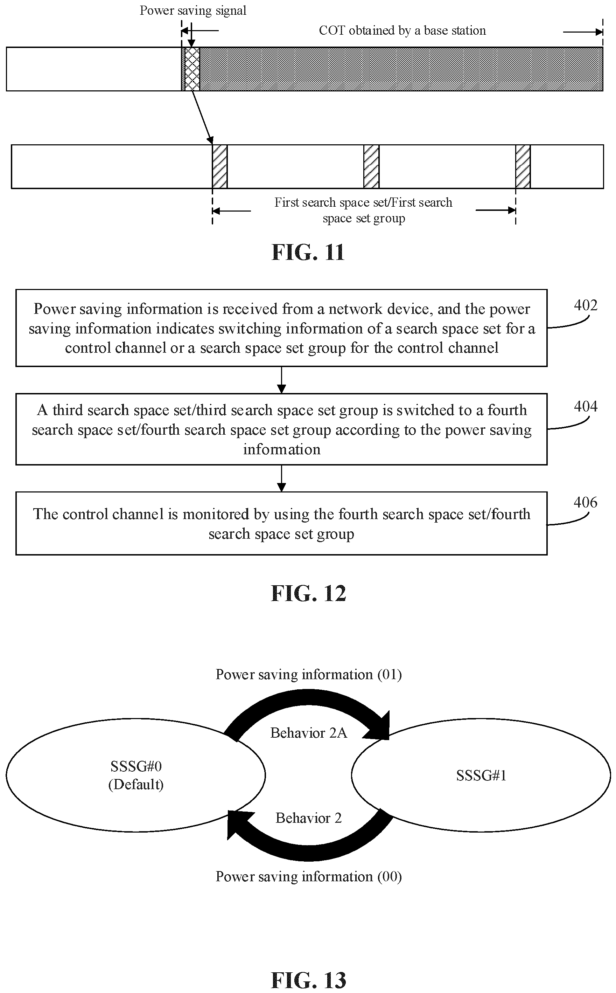

As illustrated in FIG. 11, when the network device successfully obtains the COT through the LBT, the network device can send power saving information to the terminal. After receiving the power saving information, the terminal obtains the channel occupation information of the network device, determines to receive the PDCCH according to the first search space set when entering a time range of the COT. Before the wake-up receiver receives the power saving information, the traditional receiver of the terminal is not required to detect the PDCCH. Accordingly, the channel occupation information obtained in the power saving information can also cause the terminal to stop receiving the PDCCH according to the second search space set at the end of the COT.

It is apparent that, the manner illustrated in FIG. 11 saves more power.

To sum up, according to the method of the embodiment, power saving information is transmitted by using a first transmission parameter, and a control channel is transmitted by using a second transmission parameter. Since power consumption of the first transmission parameter is less than power consumption of the second transmission parameter under the same condition, the present disclosure can save more power compared with the related art in which the power saving information and the control channel are transmitted by using the same transmission parameter, thereby providing a better power saving performance for the UE in the connected state and improving the endurance time of the UE.

According to the method provided by the embodiment, the power saving information is transmitted by the network device at any time when the LBT is successful, instead of after waiting for a certain monitoring occasion in the second search space set. Thus, the terminal can use the channel timely, and the success rate of channel access is improved.

According to the method provided by the embodiment, the terminal does not monitor the control channel during a time other than the channel occupation time, so that the terminal in the connected state can save power better.

For the case where the power saving information indicates switching information of the search space set /search space set group for the control channel, FIG. 12 is a flowchart of a method for monitoring a control channel according to an exemplary embodiment of the present disclosure. The embodiment is described by taking the application of the method to a terminal as an example. The method includes the following operations.

In operation 402, power saving information sent by a network device is received. The power saving information indicates switching information of a search space set or a search space set group for the control channel.

When the unlicensed spectrum is used, the network device is not limited to send power saving information to the terminal device by the search space set of PDCCH after the LBT is successful, and may send the power saving information to the terminal at any time through the power saving information to inform the terminal to switch the search space, so as to reduce the power consumption of the UE.

In operation 404, the third search space set/third search space set group is switched to the fourth search space set/fourth search space set group according to the power saving information.

Each of the third search space set and the fourth search space set is a search space set among at least two pre-configured search space sets, or each of the third search space set group and the fourth search space set group is a search space set group among at least two pre-configured search space set groups.

Exemplarily, the power saving information indicates at least one of the following behaviors: Behavior 2, Behavior 2A, and Behavior 2B.

Behavior 2 is to monitor the PDCCH according to search space set group (SSSG) # 0.

Behavior 2Ais to switch from SSSG # 0 to SSSG # 1.

Behavior 2B is to switch from SSSG # 0 and SSSG # 1 to SSSG # 2 when configuring three SSSGs.

Take configuring two SSSGs as an example, when the power saving information indicates 00, it represents behavior 2. That is, the SSSG of the terminal switches to SSSG # 0. When the power saving information indicates 01, it represents behavior 2A, that is, the SSSG of the UE is switched to SSSG # 1, as illustrated in FIG. 13.

In operation 406, the control channel is monitored by using the fourth search space set/fourth search space set group.

To sum up, according to the method of the embodiment, power saving information is transmitted by using a first transmission parameter, and a control channel is transmitted by using a second transmission parameter. Since power consumption of the first transmission parameter is less than power consumption of the second transmission parameter under the same condition, the present disclosure can save more power compared with the related art in which the power saving information and the control channel are transmitted by using the same transmission parameter, thereby providing a better power saving performance for the UE in the connected state and improving the endurance time of the UE.

According to the method provided by the embodiment, the power saving information is transmitted by the network device at any time when the LBT is successful, instead of after waiting for a certain monitoring occasion in the second search space set. Thus, the terminal can use the channel timely, and the success rate of channel access is improved.

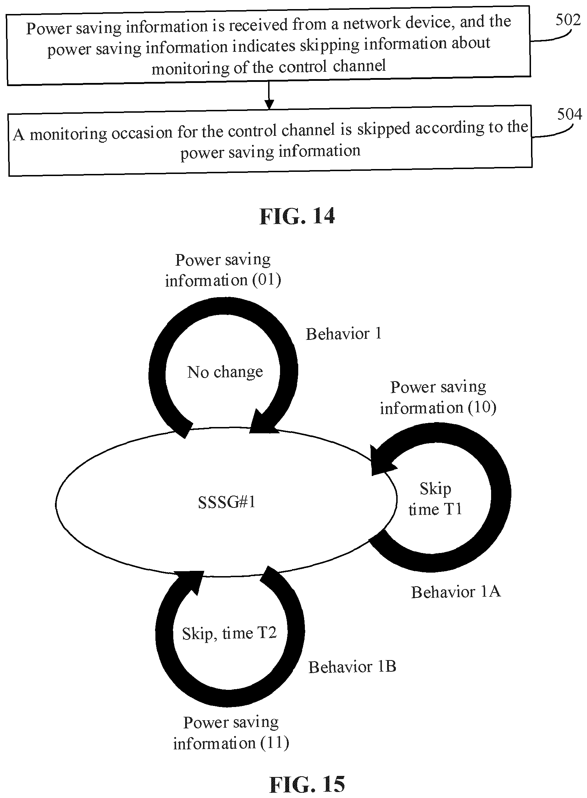

For the case where the power saving information indicates skipping information of a monitoring time for the control channel, FIG. 14 is a flowchart of a method for monitoring a control channel according to an exemplary embodiment of the present disclosure. The embodiment is described by taking the application of the method to a terminal as an example. The method includes the following operations.

In operation 502, power saving information sent by a network device is received. The power saving information indicates information about skipping monitoring of the control channel.

Exemplarily, the power saving information indicates any one of the following information.

The power saving information indicates not skipping a monitoring time for the control channel.

Alternatively, the power saving information indicates skipping a monitoring time for the control channel.

Alternatively, the power saving information indicates skipping a monitoring time for the control channel and indicates a skipping duration.

For example, a skipping behavior of a monitoring occasion for the PDCCH includes Behavior 1, Behavior 1A, Behavior 1B and Behavior 1C as follows.

In Behavior 1, the monitoring occasion for the PDCCH is skipped and is not activated.

In Behavior 1A, the monitoring occasion for the PDCCH is skipped, and skipping duration is T1.

In Behavior 1B, the monitoring occasion for the PDCCH is skipped, and skipping duration is T2.

In Behavior 1C, the monitoring occasion for the PDCCH is skipped, and skipping duration is T3.

In operation 504, the monitoring occasion for the control channel is skipped according to the power saving information.

As illustrated in FIG. 15, under the current search space set/search space set group of the UE, when receiving a skipping indication for the monitoring occasion of the PDCCH, the UE can determine the skipping behavior according to the power saving information.

For example, 01 indicated in the power saving information indicates that the monitoring occasion for the PDCCH is not skipped. For another example, 10 indicated in the power saving information indicates that a skipping duration of the monitoring occasion for the PDCCH is T1. For another example, 11 indicated in the power saving information indicates that a skipping duration of the monitoring occasion for the PDCCH is T2.

To sum up, according to the method of the embodiment, power saving information is transmitted by using a first transmission parameter, and a control channel is transmitted by using a second transmission parameter. Since power consumption of the first transmission parameter is less than power consumption of the second transmission parameter under the same condition, the present disclosure can save more power compared with the related art in which the power saving information and the control channel are transmitted by using the same transmission parameter, thereby providing a better power saving performance for the UE in the connected state and improving the endurance time of the UE.

It should be noted that, in some embodiments, the switching information of the search space set/search space set group and skipping information of the monitoring occasion for the control channel may both be indicated to the terminal through the power saving information.

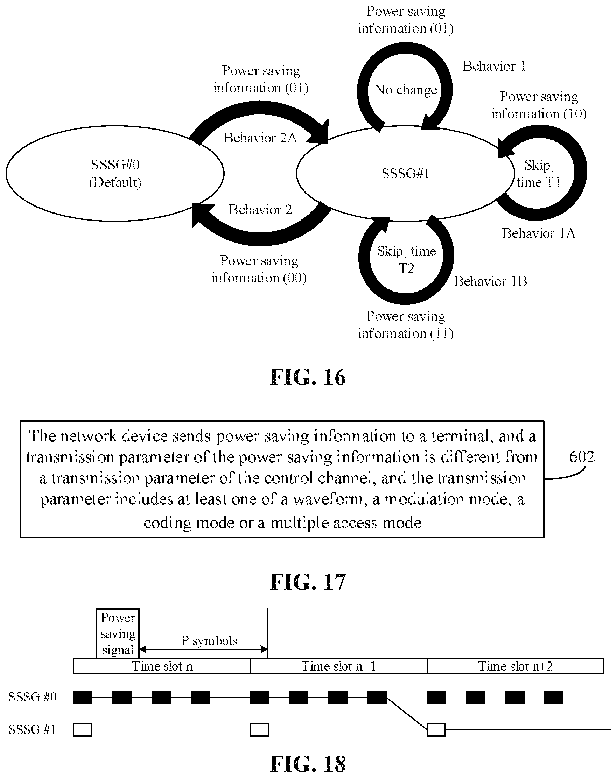

When the switching of the search space set/search space set group and the skipping information for the PDCCH are simultaneously configured, the power saving information includes 2-bit indication information which indicates a terminal behavior of the PDCCH monitoring occasion adaptation, as described in FIG. 16.

`00' denotes behavior 2.

'01' denotes behavior 2A or behavior 1.

`10' denotes behavior 1A.

'11' denotes behavior 1B.

It should be noted that after receiving the power saving information, the terminal can also send response information of the power saving information to the network device. For example, the terminal can send response information of the power saving information through a back scattering signal, that is, the terminal can send response information of the power saving information based on back scattering capability of the wake-up receiver. For example, the terminal can send the response information of the power saving information through the transmission parameter of the control channel. For example, the terminal can send the response information of the power saving information through an uplink channel.

FIG. 17 is a flowchart of a method for monitoring a control channel according to an exemplary embodiment of the present disclosure. The embodiment is described by taking applying the method to a network device as an example. The method includes the following operations.

In operation 602, a power saving signal is sent to a terminal. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel. Optionally, power consumption of the transmission parameter of the power saving signal is less than power consumption of the transmission parameter of the control channel.

Exemplarily, power saving information indicates at least one of: channel occupation information; switching information of a search space set or a search space set group for the control channel; or skipping information of a monitoring occasion for the control channel.

For example, the power saving information indicates a remaining channel occupation time.

For example, the power saving information indicates switching from a third search space set to a fourth search space set, or the power saving information indicates switching from a third search space set group to a fourth search space set group.

Each of the third search space set and the fourth search space set is a search space set among at least two pre-configured search space sets, and each of the third search space set group and the fourth search space set group is a search space set group among at least two pre-configured search space set groups.

For example, the power saving information indicates not skipping a monitoring time for the control channel, the power saving information indicates skipping a monitoring time for the control channel, or the power saving information indicates skipping a monitoring time for the control channel and indicates a skipping duration.

Optionally, the base station also receives response information of the power saving information. For example, the base station receives the response information of the power saving information carried in a back scattering signal; or the base station receives the response information of the power saving information carried in an uplink channel.

To sum up, according to the method of the embodiment, power saving information is transmitted by using a first transmission parameter, and a control channel is transmitted by using a second transmission parameter. Since power consumption of the first transmission parameter is less than power consumption of the second transmission parameter under the same condition, the present disclosure can save more power compared with the related art in which the power saving information and the control channel are transmitted by using the same transmission parameter, thereby providing a better power saving performance for the UE in the connected state and improving the endurance time of the UE.

It should be noted that in some embodiments, a time delay exists between an effective time of the power saving signal carrying the power saving information and an effective time of a monitoring mode for the control channel. Exemplarily, the time delay is predefined, the time delay is pre-configured, or the time delay is configured by the network device. As illustrated in FIG. 18, after receiving the power saving signal for triggering switching, the switching is implemented at a boundary of the first slot after waiting for P symbols. That is, when the terminal receives the power saving signal for triggering switching of the search space in the slot n, the switching occurs at the left boundary of the slot n+2 because the terminal needs a certain switching delay. Here, a value of P is configurable, and the value of P is related to UE capability.

A time-frequency resource carrying the power saving signal is predefined; or a time-frequency resource carrying the power saving signal is configured by the network device.

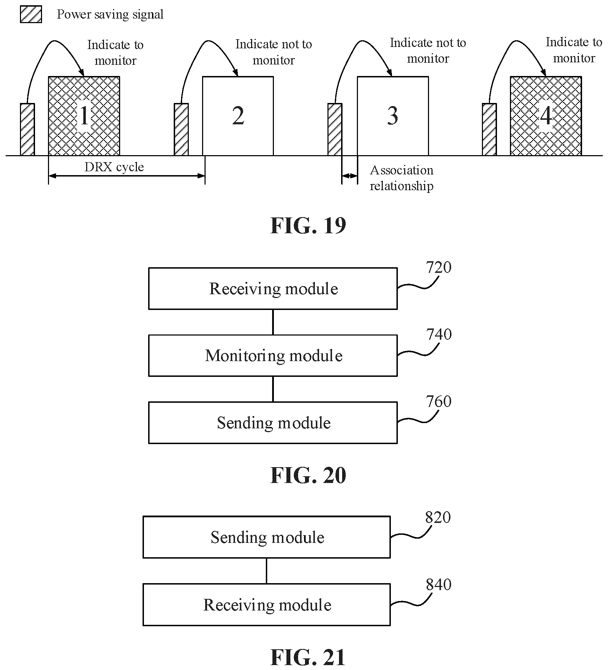

It should be noted that, in some embodiments, the time-frequency resource carrying the power saving information has an association relationship with a time-frequency resource of the control channel. Exemplarily, the association relationship is predefined or pre-configured, or the association is configured by the network device. As illustrated in FIG. 19, for example, each of the control channels 1 to 4 corresponds to a respective one of power saving signals, and a timing relationship between the power saving signal and the control channel is fixed. In some embodiments, the power saving signal may be sent at any time during a dormancy period of the current DRX.

FIG. 20 illustrates a block diagram of a device for monitoring a control channel according to an exemplary embodiment of the present disclosure. The device includes a receiving module 720.

The receiving module 720 is configured to receive a power saving signal from a network device. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

In an exemplary embodiment, the power saving information indicates at least one of channel occupation information; switching information of a search space set for the control channel or a search space set group for the control channel; or skipping information of a monitoring occasion for the control channel.

In an exemplary embodiment, the power saving information indicates channel occupation information. The device further includes a monitoring module 740.

The monitoring module 740 is configured to monitor the control channel by using a first search space set or a first search space set group according to the power saving information.

The first search space set or the first search space set group is search space set(s) used during a channel occupation time.

In an exemplary embodiment, the monitoring module 740 is configured to determine a remaining channel occupation time according to the power saving information, and monitor, during the remaining channel occupation time, the control channel by using the first search space set or the first search space set group.

In an exemplary embodiment, the monitoring module 740 is configured to not monitor the control channel during a time other than the channel occupation time.

In an exemplary embodiment, the monitoring module 740 is configured to monitor the control channel by using a second search space set or a second search space set group during a time other than the channel occupation time.

In an exemplary embodiment, the power saving information indicates the switching information of the search space set for the control channel or the search space set group for the control channel, and the device further includes a monitoring module 740.

The monitoring module 740 is configured to switch from a third search space set to a fourth search space set according to the power saving information, and monitor the control channel by using the fourth search space set.

Alternatively, the monitoring module is configured to switch from a third search space set group to a fourth search space set group according to the power saving information, and monitor the control channel by using the fourth search space set group.

In an exemplary embodiment, each of the third search space set and the fourth search space set is a search space set among at least two pre-configured search space sets, and each of the third search space set group and the fourth search space set group is a search space set group among at least two pre-configured search space set groups.

In an exemplary embodiment, the power saving information indicates not skipping a monitoring time for the control channel, or the power saving information is indicates skipping a monitoring time for the control channel. or the power saving information indicates skipping a monitoring time for the control channel and indicate a skipping time.

In an exemplary embodiment, a time delay exists between a time of the power saving signal carrying the power saving information and an effective time of the monitoring mode for the control channel.

In an exemplary embodiment, the time delay is predefined, or the time delay is pre-configured, or the time delay is configured by the network device.

In an exemplary embodiment, a time-frequency resource carrying the power saving information is predefined, or the time-frequency resource carrying the power saving information is configured by the network device.

In an exemplary embodiment, the time-frequency resource carrying the power saving information has an association relationship with a time-frequency resource of the control channel.

In an exemplary embodiment, the association relationship is predefined or the association relationship is pre-configured. or the association relationship is configured by the network device.

In an exemplary embodiment, the device further includes a sending module 760.

The sending module 760 is configured to send response information of the power saving information.

In an exemplary embodiment, the sending module 760 is configured to send the response information of the power saving information through a back scattering signal, or the sending module 760 is configured to send the response information of the power saving information through an uplink channel.

FIG. 21 illustrates a block diagram of a device for monitoring a control channel according to an exemplary embodiment of the present disclosure. The device includes a sending module 820.

The sending module 820 is configured to send a power saving signal to a terminal. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel. Optionally, power consumption of the transmission parameter of the power saving signal is less than power consumption of the transmission parameter of the control channel.

In an exemplary embodiment, power saving information indicates at least one of channel occupation information; switching information of a search space set for the control channel or a search space set group for the control channel; or skipping information of a monitoring occasion for the control channel.

In an exemplary embodiment, the power saving information indicates a remaining channel occupation time.

In an exemplary embodiment, the power saving information indicates switching from a third search space set to a fourth search space set; or the power saving information indicates switching from a third search space set group to a fourth search space set group.

In an exemplary embodiment, each of the third search space set and the fourth search space set is a search space set among at least two pre-configured search space sets, and each of the third search space set group and the fourth search space set group is a search space set group among at least two pre-configured search space set groups.

In an exemplary embodiment, the power saving information indicates not skipping a monitoring time for the control channel, or the power saving information indicates skipping a monitoring time for the control channel, or the power saving information indicates skipping a monitoring time for the control channel and indicates a skipping duration.

In an exemplary embodiment, the sending module 820 is configured to send the power saving signal after the Listen Before Talk (LBT) on an unlicensed spectrum is successful.

In an exemplary embodiment, a time delay exists between a time of the power saving signal carrying the power saving information and an effective time of the monitoring mode for the control channel

In an exemplary embodiment, the time delay is predefined, the time delay is pre-configured, or the time delay is configured by the network device.

In an exemplary embodiment, a time-frequency resource carrying the power saving information is predefined, or the time-frequency resource carrying the power saving information is configured by the network device.

In an exemplary embodiment, the time-frequency resource carrying the power saving information has an association relationship with a time-frequency resource of the control channel.

In an exemplary embodiment, the association relationship is predefined, the association relationship is pre-configured, or the association relationship is configured by the network device.

In an exemplary embodiment, the device further includes a receiving module 840.

The receiving module 840 is configured to receive response information of the power saving information.

In an exemplary embodiment, the receiving module 840 is configured to receive response information of the power saving information carried in a back scattering signal, or the receiving module 840 is configured to receive response information of the power saving information carried in an uplink channel.

It should be noted that the device provided in the embodiments, when realizing its functions, are described by taking the division of various function modules as an example. In practical application, the functions may be implemented by different function modules respectively according to actual needs. That is, the content structure of the device is divided into different function modules to implement all or part of the functions described above.

For the device in the above embodiments, the specific manner in which the various modules perform operations has been described in detail in the method embodiments and thus is not be explained in detail herein.

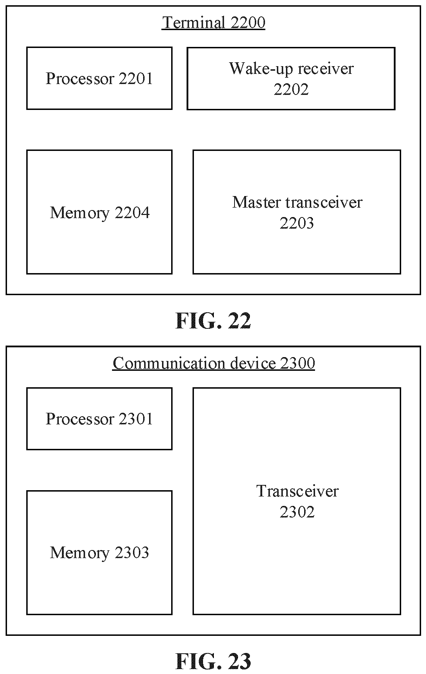

FIG. 22 is a schematic structural diagram of a terminal provided by an embodiment of the present disclosure. The terminal may include a processor 2201, a wake-up receiver 2202, a master transceiver 2203 and a memory 2204.

The processor 2201 includes one or more processing cores and executes various functional applications by running software programs and modules.

The wake-up receiver 2202 includes a zero-power receiver, or a low-power receiver. The low-power receiver is a receiver of which power consumption is less than a predetermined condition. Exemplarily, the power consumption of the low power receiver is less than the power consumption of the traditional receiver in the transceiver 2203.

The master transceiver 2203 may be used for receiving and sending information and may be a communication chip. The master transceiver 2203 may also be individually implemented as a traditional transmitter and receiver. The traditional receiver is a master receiver relative to the wake-up receiver 2202.

The memory 2204 may be used to store a computer program and the processor 2201 may be used to execute the computer program to implement the various operations performed by the terminal in the above method embodiments.

Exemplarily, the wake-up receiver 2202 is configured to receive a power saving signal sent by a network device. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

The power saving information indicates at least one of channel occupation information; switching information of a search space set for the control channel or a search space set group for the control channel; or skipping information of a monitoring occasion for the control channel.

Exemplarily, a master receiver is configured to monitor the control channel by using a first search space set or a first search space set group according to the power saving information.

The first search space set or the first search space set group is search space set(s) used during a channel occupation time.

Exemplarily, a master receiver is configured to not monitor the control channel during a time other than the channel occupation time.

Exemplarily, a master receiver is configured to monitor the control channel by using a second search space set or a second search space set group during a time other than the channel occupation time.

Exemplarily, a master receiver is configured to switch from a third search space set to a fourth search space set according to the power saving information, and monitor the control channel by using the fourth search space set; or switch from a third search space set group to a fourth search space set group according to the power saving information, and monitor the control channel by using the fourth search space set group.

In some embodiments, the terminal further includes a wake-up transmitter, and the wake-up transmitter may be integrated with the wake-up receiver into one device, which is a wake-up transceiver. The power consumption of the wake-up transceiver is less than that of the master transceiver.

Exemplarily, the wake-up transmitter is further configured to send response information of the power saving information through a back scattering signal; or the wake-up transmitter is further configured to send response information of the power saving information through an uplink channel.

In addition, the memory 2204 may be implemented by any type of volatile storage device or non-volatile storage device or combination of the volatile storage device and non-volatile storage device. The volatile storage device or non-volatile storage device may include but is not limited to: a Random Access Memory (RAM) and a Read-Only Memory (ROM), an Erasable Programmable Read-Only Memory (EPROM), an Electrically Erasable Programmable Read-Only Memory (EEPROM), a Flash memory or other solid-state storage technologies, a Compact Disc Read-Only Memory (CD-ROM), a High Density Digital Video Disc (DVD) or other optical storage, a magnetic tape cassette, a magnetic tape, magnetic disk storage or other magnetic storage devices.

FIG. 23 is a schematic structural diagram of a network device provided by an embodiment of the present disclosure. The network device may include a processor 2301, a transceiver 2302 and a memory 2303.

The processor 2301 includes one or more processing cores and executes various functional applications by running software programs and modules.

The transceiver 2302 may be used for receiving and sending information and the transceiver 2302 may be a communication chip. The transceiver 2302 may also be separately implemented as a transmitter and a receiver.

The memory 2303 may be used to store a computer program and the processor 2301 may be used to execute the computer program to implement the various operations performed by the network device in the above method embodiments.

Exemplarily, the transceiver 2302 is configured to send a power saving signal to a terminal. A transmission parameter of the power saving signal is different from a transmission parameter of the control channel, and the transmission parameter includes at least one of a waveform, a modulation mode, a coding mode or a multiple access mode.

The power saving signal is used to determine a monitoring mode for the control channel.

Exemplarily, the transceiver 2302 is configured to receive response information of the power saving information.

Exemplarily, the transceiver 2302 is configured to receive the response information of the power saving information carried in a back scattering signal; or the transceiver 2302 is configured to receive the response information of the power saving information carried in an uplink channel.

Further, the memory 2303 may be implemented by any type of volatile storage device or non-volatile storage device or a combination thereof.

The embodiment of the present disclosure further provides a computer-readable storage medium having stored thereon a computer program that, when executed by a processor, implements the method for monitoring the control channel.

Alternatively, the computer-readable storage medium may include a Read-Only Memory (ROM), a Random Access Memory (RAM), a Solid State Drives (SSD), an optical disk or the like. The random access memory may include a Resistance Random Access Memory (ReRAM) and a Dynamic Random Access Memory (DRAM).

An embodiment of the present disclosure further provides a chip, which includes a programmable logic circuitry and/or program instructions that, when run by the chip, implement the method for monitoring the control channel.

An embodiment of the present disclosure further provides a computer program product or a computer program, including computer instructions stored in a computer-readable storage medium from which a processor reads and executes the computer instructions to implement the method for monitoring the control channel.

## Claims

1. A method for monitoring a control channel, **characterized in that** the method comprises:
receiving a power saving signal from a network device, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

2. The method of claim 1, wherein power saving information indicates at least one of:
channel occupation information;
switching information of a search space set for the control channel or a search space set group for the control channel; or
skipping information of a monitoring occasion for the control channel.

3. The method of claim 2, wherein the power saving information indicates the channel occupation information, and the method further comprises:
monitoring the control channel by using a first search space set or a first search space set group according to the power saving information,
wherein the first search space set or the first search space set group is a search space set used during a channel occupation time.

4. The method of claim 3, wherein the monitoring the control channel by using the first search space set according to the power saving information comprises:
determining a remaining channel occupation time according to the power saving information; and
monitoring, during the remaining channel occupation time, the control channel by using the first search space set or the first search space set group.

5. The method of claim 3, further comprising:
not monitoring the control channel during a time other than the channel occupation time.

6. The method of claim 3, further comprising:
monitoring the control channel by using a second search space set or a second search space set group during a time other than the channel occupation time.

7. The method of claim 2, wherein the power saving information indicates the switching information of the search space set for the control channel or the search space set group for the control channel, and the method further comprises:
switching from a third search space set to a fourth search space set according to the power saving information, and monitoring the control channel by using the fourth search space set; or
switching from a third search space set group to a fourth search space set group according to the power saving information, and monitoring the control channel by using the fourth search space set group.

8. The method of claim 7, wherein
each of the third search space set and the fourth search space set is a search space set among at least two pre-configured search space sets; and
each of the third search space set group and the fourth search space set group is a search space set group among at least two pre-configured search space set groups.

9. The method of claim 2, wherein
the power saving information indicates not skipping a monitoring time for the control channel; or
the power saving information indicates skipping a monitoring time for the control channel; or
the power saving information indicates skipping a monitoring time for the control channel and a skipping time.

10. The method of any one of claims 1 to 9, wherein a time delay exists between a time of the power saving signal carrying power saving information and an effective time of the monitoring mode for the control channel.

11. The method of claim 10, wherein
the time delay is predefined;
the time delay is pre-configured; or
the time delay is configured by the network device.

12. The method of any one of claims 1 to 9, wherein
a time-frequency resource carrying the power saving information is predefined; or
the time-frequency resource carrying the power saving information is configured by the network device.

13. The method of claim 12, wherein
the time-frequency resource carrying the power saving information has an association relationship with a time-frequency resource of the control channel.

14. The method of claim 13, wherein
the association relationship is predefined;
the association relationship is pre-configured; or
the association relationship is configured by the network device.

15. The method of any one of claims 1 to 9, further comprising:
sending response information of the power saving information.

16. The method of claim 15, wherein the sending the response information of the power saving information comprises:
sending the response information of the power saving information through a back scattering signal; or
sending the response information of the power saving information through an uplink channel.

17. A method for monitoring a control channel, **characterized in that** the method is applied to a network device, and comprises:
sending a power saving signal to a terminal, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

18. The method of claim 17, wherein power saving information indicates at least one of:
channel occupation information;
switching information of a search space set for the control channel or a search space set group for the control channel; or
skipping information of a monitoring occasion for the control channel.

19. The method of claim 18, wherein
the power saving information indicates a remaining channel occupation time.

20. The method of claim 18, wherein
the power saving information indicates switching from a third search space set to a fourth search space set; or
the power saving information indicates switching from a third search space set group to a fourth search space set group.

21. The method of claim 20, wherein
each of the third search space set and the fourth search space set is a search space set among at least two pre-configured search space sets; and
each of the third search space set group and the fourth search space set group is a search space set group among at least two pre-configured search space set groups.

22. The method of claim 18, wherein
the power saving information indicates not skipping a monitoring time for the control channel; or
the power saving information indicates skipping a monitoring time for the control channel; or
the power saving information indicates skipping a monitoring time for the control channel and a skipping duration.

23. The method of any one of claims 17 to 22, wherein the sending the power saving signal to the terminal comprises:
sending the power saving signal after Listen Before Talk (LBT) on an unlicensed spectrum is successful.

24. The method of any one of claims 17 to 22, wherein a time delay exists between a time of the power saving signal carrying the power saving information and an effective time of the monitoring mode for the control channel.

25. The method of claim 24, wherein
the time delay is predefined;
the time delay is pre-configured; or
the time delay is configured by the network device.

26. The method of any one of claims 17 to 22, wherein
a time-frequency resource carrying the power saving information is predefined; or
the time-frequency resource carrying the power saving information is configured by the network device.

27. The method of claim 25, wherein
a time-frequency resource carrying the power saving information has an association relationship with a time-frequency resource of the control channel.

28. The method of claim 27, wherein
the association relationship is predefined; or
the association relationship is pre-configured; or
the association relationship is configured by the network device.

29. The method of any one of claims 17 to 22, further comprising:
receiving response information of the power saving information.

30. The method of claim 29, wherein the receiving the response information of the power saving information comprises:
receiving the response information of the power saving information carried in a back scattering signal; or
receiving the response information of the power saving information carried in an uplink channel.

31. A device for monitoring a control channel, comprising:
a receiving module configured to receive a power saving signal from a network device, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

32. The device of claim 31, wherein power saving information indicates at least one of:
channel occupation information;
switching information of a search space set for the control channel or a search space set group for the control channel; or
skipping information of a monitoring occasion for the control channel.

33. The device of claim 32, wherein the power saving information indicates the channel occupation information, and the device further comprises:
a monitoring module configured to monitor the control channel by using a first search space set or a first search space set group according to the power saving information,
wherein the first search space set or the first search space set group is a search space set used during a channel occupation time.

34. The device of claim 33, wherein the monitoring module is configured to determine a remaining channel occupation time according to the power saving information, and monitor, during the remaining channel occupation time, the control channel by using the first search space set or the first search space set group.

35. The device of claim 33, wherein
the monitoring module is further configured to not monitor the control channel during a time other than the channel occupation time.

36. The device of claim 33, wherein the monitoring module is configured to monitor the control channel by using a second search space set or a second search space set group during a time other than the channel occupation time.

37. The device of claim 32, wherein the power saving information indicates the switching information of the search space set for the control channel or the search space set group for the control channel,
the monitoring module is configured to switch from a third search space set to a fourth search space set according to the power saving information, and monitor the control channel by using the fourth search space set; or
the monitoring module is configured to switch from a third search space set group to a fourth search space set group according to the power saving information, and monitor the control channel by using the fourth search space set group.

38. The device of claim 37, wherein
each of the third search space set and the fourth search space set is a search space set among at least two pre-configured search space sets; and
each of the third search space set group and the fourth search space set group is a search space set group among at least two pre-configured search space set groups.

39. The device of claim 32, wherein
the power saving information indicates not skipping a monitoring time for the control channel; or
the power saving information indicates skipping a monitoring time for the control channel; or
the power saving information indicates skipping a monitoring time for the control channel and a skipping time.

40. The device of any one of claims 31 to 39, wherein a time delay exists between a time of the power saving signal carrying the power saving information and an effective time of the monitoring mode for the control channel.

41. The device of claim 40, wherein
the time delay is predefined;
the time delay is pre-configured; or
the time delay is configured by the network device.

42. The device of any one of claims 31 to 39, wherein
a time-frequency resource carrying the power saving information is predefined; or
the time-frequency resource carrying the power saving information is configured by the network device.

43. The device of claim 42, wherein
the time-frequency resource carrying the power saving information has an association relationship with a time-frequency resource of the control channel.

44. The device of claim 43, wherein
the association relationship is predefined;
the association relationship is pre-configured; or
the association relationship is configured by the network device.

45. The device of any one of claims 31 to 39, further comprising:
a sending module configured to send response information of the power saving information.

46. The device of claim 45, wherein
the sending module is configured to send the response information of the power saving information through a back scattering signal; or
the sending module is configured to send the response information of the power saving information through an uplink channel.

47. A device for monitoring a control channel, comprising:
a sending module configured to send a power saving signal to a terminal, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

48. The device of claim 47, wherein power saving information indicates at least one of:
channel occupation information;
switching information of a search space set for the control channel or a search space set group for the control channel; or
skipping information of a monitoring occasion for the control channel.

49. The device of claim 48, wherein
the power saving information indicates a remaining channel occupation time.

50. The device of claim 48, wherein
the power saving information indicates switching from a third search space set to a fourth search space set; or
the power saving information indicates switching from a third search space set group to a fourth search space set group.

51. The device of claim 50, wherein
each of the third search space set and the fourth search space set is a search space set among at least two pre-configured search space sets; and
each of the third search space set group and the fourth search space set group is a search space set group among at least two pre-configured search space set groups.

52. The device of claim 48, wherein
the power saving information indicates not skipping a monitoring time for the control channel; or
the power saving information indicates skipping a monitoring time for the control channel; or
the power saving information indicates skipping a monitoring time for the control channel and a skipping duration.

53. The device of any one of claims 47 to 52, wherein the sending module is configured to send the power saving signal after Listen Before Talk (LBT) on an unlicensed spectrum is successful.

54. The device of any one of claims 47 to 52, wherein a time delay exists between a time of the power saving signal carrying the power saving information and an effective time of the monitoring mode for the control channel.

55. The device of claim 54, wherein
the time delay is predefined;
the time delay is pre-configured; or
the time delay is configured by the network device.

56. The device of any one of claims 47 to 52, wherein
a time-frequency resource carrying the power saving information is predefined; or
the time-frequency resource carrying the power saving information is configured by the network device.

57. The device of claim 55, wherein
a time-frequency resource carrying the power saving information has an association relationship with a time-frequency resource of the control channel.

58. The device of claim 57, wherein
the association relationship is predefined;
the association relationship is pre-configured; or
the association relationship is configured by the network device.

59. The device of any one of claims 47 to 52, further comprising:
a receiving module configured to receive response information of the power saving information.

60. The device of claim 59, wherein
the receiving module is configured to receive the response information of the power saving information carried in a back scattering signal; or
the receiving module is configured to receive the response information of the power saving information carried in an uplink channel.

61. A terminal comprising a wake-up receiver, wherein
the wake-up receiver is configured to receive a power saving signal from a network device, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

62. A network device comprising a transmitter, wherein
the transmitter is configured to send a power saving signal to a terminal, wherein a transmission parameter of the power saving signal is different from a transmission parameter of the control channel, and the transmission parameter comprises at least one of a waveform, a modulation mode, a coding mode or a multiple access mode,
wherein the power saving signal is used to determine a monitoring mode for the control channel.

63. A computer-readable storage medium having stored thereon a computer program that, when executed by a processor, implements the method for monitoring the control channel of any one of claims 1 to 30.

64. A chip comprising a programmable logic circuitry and/or program instructions that, when run by the chip, implement the method for monitoring the control channel of any one of claims 1 to 30.

65. A computer program product or a computer program, comprising computer instructions stored in a computer-readable storage medium from which a processor reads and executes the computer instructions to implement the method for monitoring the control channel of any one of claims 1 to 30.
